(19) **Europäisches Patentamt / European Patent Office / Office européen des brevets**

(11) **EP 2 887 090 B1**

(12) **FASCICULE DE BREVET EUROPEEN**

(45) Date de publication et mention de la délivrance du brevet:
**24.08.2016 Bulletin 2016/34**

(51) Int Cl.:
*G01S 7/02* (2006.01)  *H01Q 15/22* (2006.01)
*H01Q 15/24* (2006.01)  *H01Q 19/00* (2006.01)
*G01R 29/10* (2006.01)  *G01S 7/40* (2006.01)

(21) Numéro de dépôt: **14197857.7**

(22) Date de dépôt: **15.12.2014**

(54) **Calibration d'un émetteur ou recepteur de radar polarimétrique**

Eichung eines Senders oder Empfängers von polarimetrischen Radarimpulsen

Calibration of a polarimetric radar transmitter or receiver

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363047**

(43) Date de publication de la demande:
**24.06.2015 Bulletin 2015/26**

(73) Titulaires:
- **ONERA (Office National d'Etudes et de Recherches Aérospatiales)**
  **91120 Palaiseau (FR)**
- **CENTRE NATIONAL DE LA RECHERCHE SCIENTIFIQUE -CNRS-**
  **75016 Paris (FR)**
- **Ecole Polytechnique**
  **91120 Palaiseau (FR)**

(72) Inventeurs:
- **Trouve, Nicolas**
  **91400 Orsay (FR)**
- **Colin Koeniguer, Elise**
  **91140 Villebon Sur Yvette (FR)**
- **De Martino, Antonello**
  **91300 Massy (FR)**

(74) Mandataire: **Cabinet Plasseraud**
  **66, rue de la Chaussée d'Antin**
  **75440 Paris Cedex 09 (FR)**

(56) Documents cités:
**US-A1- 2012 007 770**

- **NASHASHIBI A ET AL: "A CALIBRATION TECHNIQUE FOR POLARIMETRIC COHERENT-ON-RECEIVE RADAR SYSTEMS", IEEE TRANSACTIONS ON ANTENNAS AND PROPAGATION, IEEE SERVICE CENTER, PISCATAWAY, NJ, US, vol. 43, no. 4, 1 avril 1995 (1995-04-01), pages 396-404, XP000496271, ISSN: 0018-926X, DOI: 10.1109/8.376038**

**Description**

La présente invention concerne un procédé de calibration d'une antenne d'émission ou d'une antenne de réception d'un radar polarimétrique. Elle concerne aussi un radar polarimétrique qui est adapté pour un tel procédé de calibration, ainsi qu'un procédé de mesure polarimétrique qui utilise des résultats du procédé de calibration.

Un radar polarimétrique permet de détecter une cible par la modification de polarisation que produit la cible, entre une onde électromagnétique incidente qui est émise par un émetteur du radar en direction de la cible, et une partie de l'onde qui est réfléchie par la cible puis détectée par un récepteur du radar. Une telle modification est déterminée pour deux polarisations différentes de l'onde incidente, en mesurant des composantes de l'onde qui est réfléchie selon deux polarisations différentes de réception, pour chaque polarisation de l'onde incidente. Pour tenir compte des atténuations et des déphasages potentiels, une polarisation quelconque est identifiée par un vecteur à deux dimensions, dont les coordonnées sont des nombres complexes. Ce vecteur est désigné par vecteur de Jones dans le domaine technique des ondes électromagnétiques. L'onde électromagnétique qui est produite par l'émetteur du radar est associée à un premier vecteur de Jones, qui est exprimé par rapport à une base de polarisation d'émission. De même, l'onde qui est réfléchie par la cible puis détectée par le récepteur est associée à un second vecteur de Jones, qui est lui-même exprimé par rapport à une base de polarisation de réception. Lors d'une mesure radar, la matrice qui relie les vecteurs de Jones d'émission et de réception, qui est carrée, de dimension deux et dont les coefficients sont aussi des nombres complexes, constitue le résultat de la mesure polarimétrique. Elle est appelée matrice de Sinclair, et ses quatre coefficients constituent quatre canaux d'information, qui permettent de détecter et de caractériser la cible. Mais, le gain apparent de chaque canal dépend de rendements respectifs de l'émetteur et du récepteur du radar, pour chaque couple formé d'une polarisation d'émission et d'une polarisation de réception. Ces rendements d'émission et de réception sont inconnus a priori, et doivent être déterminés en premier lieu pour obtenir ensuite des mesures absolues pour des cibles à caractériser.

Mais, la détermination de ces gains, appelée calibration polarimétrique, peut être longue et difficile à effectuer. Les méthodes déjà proposées pour calibrer un radar polarimétrique utilisent des cibles-étalons, pour lesquelles la matrice de Sinclair est connue initialement. Des séries de mesures qui sont effectuées avec ces cibles-étalons permettent alors de déterminer deux matrices qui caractérisent les distorsions polarimétriques produites par l'émetteur d'une part, et par le récepteur d'autre part. Eventuellement, des hypothèses simplificatrices peuvent être adoptées, pour réduire le nombre des mesures de calibration, et le nombre de cibles-étalons qui sont nécessaires. Mais, une erreur de calibration peut résulter de telles hypothèses simplificatrices, qui affecte les mesures ultérieures. En outre, ces méthodes de calibration présentent les difficultés suivantes :

- il est nécessaire de connaître précisément la matrice de Sinclair de chaque cible-étalon qui est utilisée, et d'orienter cette cible-étalon lors du procédé de calibration conformément aux conditions d'application de la matrice. Sinon, l'utilisation de la cible-étalon n'est pas cohérente avec la matrice de Sinclair qui est adoptée pour celle-ci ;

- l'installation des cibles-étalons sur les sites de mesure peut être fastidieuse, ou impossible en fonction des conditions d'accès et d'environnement de chaque site ;

- les cibles-étalons peuvent être de grandes dimensions, et par suite difficiles à manipuler et installer, notamment lorsque la fréquence du signal électromagnétique qui est utilisée est basse ;

- certaines cibles-étalons ne sont compatibles qu'avec la configuration monostatique de radars polarimétriques, notamment à cause d'une réflexion du signal électromagnétique par la cible-étalon qui est très resserrée autour d'une direction nominale de réflexion ;

- certains procédés nécessitent d'être mis en oeuvre dans une chambre anéchoïque ;

- la durée du procédé de calibration peut être longue, notamment si aucune hypothèse simplificatrice n'est adoptée ; et

- la durée d'intégration peut être longue pour chaque mesure qui est effectuée pour la calibration, de sorte que la cible-étalon n'est plus immobile sur cette durée. Il en résulte une imprécision de la calibration.

La présente invention a alors pour but de proposer un nouveau procédé de calibration d'un radar polarimétrique, pour lequel certains au moins des inconvénients précités sont réduits ou supprimés.

L'article de Nashashibi, "A Calibration Technique for Polarimetric Coherent-on-Receive Radar Systems", IEEE transactions on Antennas and Propagation, vol. 43, April 1995, et le brevet US 2012/0007770 présentent tous les deux des techniques de calibration d'un radar polarimétrique.

Le procédé de calibration de l'invention s'applique à une antenne d'émission ou émetteur, ou à une antenne de réception ou récepteur, d'un radar polarimétrique, lorsque cette antenne à calibrer et une scène qui est utilisée pour le procédé ont des caractéristiques polarimétriques qui restent sensiblement constantes pendant l'étape de mesure du procédé. Ce procédé de l'invention comprend :

/1/ une étape de mesures, comprenant au moins trois mesures polarimétriques, et chaque mesure comprenant ellemême une émission d'un signal électromagnétique par l'émetteur successivement selon au moins deux premières polarisations qui forment une base de polarisation d'émission, et pour chaque première polarisation une détection par le récepteur d'une partie du signal réfléchie par la scène, selon au moins deux secondes polarisations qui forment une base de polarisation de réception ; et

/2/ une étape d'estimation de caractéristiques polarimétriques de l'antenne à calibrer, à partir de résultats des mesures polarimétriques de l'étape de mesure.

Le procédé de l'invention est caractérisé en ce que dans l'étape de mesures :

- au moins deux desdites au moins trois mesures polarimétriques sont réalisées avec un moyen amovible qui possède deux axes actifs. Ce moyen amovible est disposé sur le trajet du signal électromagnétique entre l'antenne à calibrer et la scène, et atténue et/ou retarde différemment deux composantes de polarisation du signal qui sont respectivement parallèles aux deux axes actifs ;

- une position angulaire des deux axes actifs autour d'une direction de propagation du signal à l'emplacement du moyen amovible, est variée entre chacune desdites au moins deux mesures polarimétriques ; et

- au moins une autre desdites au moins trois mesures polarimétriques est réalisée sans le moyen amovible.

L'étape d'estimation comprend alors une résolution d'un système d'équations qui caractérisent au moins partiellement des distorsions polarimétriques produites par l'émetteur ou par le récepteur, et qui sont modélisées par des matrices de nombres complexes.

Grâce à l'utilisation du moyen amovible qui est introduit par l'invention, un tel procédé de calibration présente les avantages suivants, dont certains sont considérables par rapport aux contraintes et exigences des procédés connus antérieurement :

- le nombre des mesures qui sont nécessaires pour calibrer le radar peut être aussi bas que trois mesures pour l'émetteur, plus deux mesures supplémentaires pour le récepteur, sans hypothèses simplificatrices ;

- aucune cible-étalon n'est nécessaire ;

- le procédé ne nécessite pas d'être mis en oeuvre dans une chambre anéchoïque ;

- la scène qui est utilisée dans l'étape de mesures peut être quelconque, et il n'est pas nécessaire de connaître initialement ses caractéristiques de réponse polarimétrique. En outre, le procédé ne nécessite pas de déterminer ces caractéristiques de réponse polarimétrique de la scène ;

- les bases de polarisation d'émission et de réception peuvent être quelconques, notamment différentes l'une de l'autre ;

- le procédé peut être utilisé aussi bien pour un radar polarimétrique monostatique que bistatique ; et

- il n'est pas indispensable de déterminer expérimentalement la position angulaire du moyen amovible pour chaque mesure polarimétrique du procédé de calibration qui est réalisée avec ce moyen. Cette position angulaire peut être retrouvée ensuite par calcul pendant l'étape d'estimation. Une réduction de la durée qui est nécessaire pour calibrer chaque antenne du radar en résulte.

Dans certains cas particuliers de mise en oeuvre de l'invention, le moyen amovible qui est utilisé peut atténuer les composantes du signal qui sont parallèles à ses deux axes actifs, dans des proportions qui sont identiques pour ces deux composantes. Dans ce cas, l'étape d'estimation aboutit à une calibration en phase de l'émetteur ou du récepteur.

Dans d'autres cas particuliers, le moyen amovible qui est utilisé peut produire des déphasages qui sont identiques pour deux composantes du signal qui sont respectivement parallèles aux deux axes actifs. Dans ce cas, l'étape d'estimation aboutit à une calibration en module de l'émetteur ou du récepteur.

Mais dans le cas général où l'élément amovible atténue dans des proportions différentes et retarde différemment, l'une et l'autre des composantes du signal qui sont parallèles respectivement aux deux axes actifs, l'étape d'estimation aboutit à une calibration complète de l'émetteur ou du récepteur : en module et en phase.

De préférence, les positions angulaires des deux axes actifs du moyen amovible, lors des mesures polarimétriques qui sont effectuées en utilisant ce moyen amovible, peuvent présenter entre elles des écarts d'angle qui sont compris entre 70°/N et 110°/N, N étant le nombre des mesures polarimétriques réalisées avec le moyen amovible. La précision de la calibration qui est réalisée, est alors supérieure.

Dans certaines mises en oeuvre d'un procédé de calibration conforme à l'invention, et lorsque l'antenne à calibrer est l'émetteur, le système d'équations qui est résolu dans l'étape d'estimation peut comprendre les équations matricielles suivantes, n étant un indice entier non nul qui numérote les mesures polarimétriques réalisées avec le moyen amovible disposé entre l'émetteur et la scène :

$$C_n \cdot A - A \cdot R(\theta_n) \cdot P \cdot R(\theta_n)^{-1} = 0$$

où A est la matrice à deux lignes et deux colonnes de coefficients complexes, qui caractérise les distorsions polarimétriques qui sont produites par l'émetteur,

$C_n$ est égale à $S_n \cdot S_0^{-1}$,

$S_0$ est une matrice de mesure à coefficients complexes, obtenue pour la mesure polarimétrique qui est réalisée sans le moyen amovible, et exprimée dans les bases de polarisation d'émission et de réception,

l'exposant -1 désigne l'inverse de la matrice concernée,

$S_n$ est une matrice de mesure à coefficients complexes, obtenue pour chacune mesure polarimétrique qui est réalisée avec le moyen amovible disposé entre l'émetteur et la scène, et exprimée dans les bases de polarisation d'émission et de réception,

$\theta_n$ est un angle de la position angulaire du moyen amovible pour la mesure polarimétrique n, et $R(\theta_n)$ est une matrice de rotation d'angle $\theta_n$, et

P est la matrice suivante :

$$P = \begin{bmatrix} 1 & 0 \\ 0 & \lambda \end{bmatrix}$$

$\lambda$ étant égal au quotient de deux valeurs complexes d'atténuation et de déphasage, qui sont relatives respectivement aux deux axes actifs du moyen amovible.

La résolution du système d'équations fournit des valeurs numériques respectives pour chaque angle $\theta_n$, pour le quotient $\lambda$ et pour les coefficients de la matrice A.

Symétriquement, lorsque l'antenne à calibrer est le récepteur, le système d'équations qui est résolu dans l'étape d'estimation peut comprendre les équations matricielles suivantes, n étant alors un indice entier non nul qui numérote les mesures polarimétriques réalisées avec le moyen amovible disposé entre la scène et le récepteur :

$$W \cdot D_n - R(\theta_n) \cdot P \cdot R(\theta_n)^{-1} \cdot W = 0$$

où W est la matrice à deux lignes et deux colonnes de coefficients complexes, qui caractérise les distorsions polarimétriques produites par le récepteur,

$D_n$ est égale à $S_0^{-1} \cdot T_n$,

$S_0$ est encore la matrice de mesure qui est obtenue pour la mesure polarimétrique réalisée sans le moyen amovible,

$T_n$ est une matrice de mesure à coefficients complexes, qui est obtenue pour chaque mesure polarimétrique réalisée avec le moyen amovible disposé entre la scène et le récepteur, et exprimée dans les bases de polarisation d'émission et de réception,

θ_n est encore l'angle de la position angulaire du moyen amovible pour la mesure polarimétrique n, et R(θ_n) la matrice de rotation d'angle θ_n, et

P est encore la matrice d'atténuation et de déphasage du moyen amovible.

Le système d'équations est alors résolu pour obtenir des valeurs numériques respectives pour chaque angle θ_n, pour le quotient λ et pour les coefficients de la matrice W.

L'invention propose aussi un radar polarimétrique, pouvant être monostatique ou bistatique, qui comprend :

- une antenne d'émission ou émetteur, capable d'émettre en direction d'une scène, un signal électromagnétique selon deux premières polarisations, ces deux premières polarisations formant une base de polarisation d'émission ;

- une antenne de réception ou récepteur, capable de recevoir selon deux secondes polarisations, une partie du signal électromagnétique qui est réfléchie par la scène, lesdites deux secondes polarisations formant une base de polarisation de réception ; et

- un contrôleur de mesure polarimétrique, capable de commander l'émetteur pour émettre le signal électromagnétique selon une des premières polarisations puis selon l'autre première polarisation, et, pour chaque première polarisation, de contrôler le récepteur pour détecter la partie réfléchie du signal selon une des secondes polarisations et selon l'autre seconde polarisation.

Le radar polarimétrique de l'invention est caractérisé en ce qu'il comprend en outre :

- un moyen amovible qui possède des caractéristiques polarimétriques modélisables par une matrice de transfert polarimétrique, dont deux valeurs propres complexes sont différentes et associées respectivement à deux axes actifs du moyen amovible selon lesquels le signal électromagnétique est atténué et/ou retardé différemment ; et

- un moyen de traitement, comprenant lui-même un moyen de stockage apte à stocker au moins trois résultats de mesures polarimétriques, et un moyen de calcul apte à exécuter l'étape d'estimation des caractéristiques polarimétriques de l'antenne à calibrer, pour un procédé de calibration qui est conforme à l'invention et appliqué au radar.

Enfin, l'invention propose encore un procédé de mesure polarimétrique qui utilise un radar polarimétrique tel que décrit précédemment, et qui comprend :

- une étape de mesure polarimétrique, qui est réalisée en dirigeant vers une cible le signal électromagnétique émis par l'émetteur, de façon à obtenir un résultat brut de mesure ; et

- une étape de correction, qui comprend une combinaison du résultat brut de mesure avec des résultats d'un procédé de calibration conforme à l'invention, appliqué à l'émetteur et au récepteur du radar polarimétrique utilisé.

Le procédé de calibration ayant fourni les matrices de distorsions A et W respectivement pour l'émetteur et pour le récepteur du radar, la combinaison du résultat brut de mesure avec les résultats du procédé de calibration, peut comprendre le calcul suivant :

$$M_{cible} = A^{-1} \cdot M_0 \cdot W^{-1}$$

où $M_0$ est une matrice formant le résultat brut de la mesure qui a été réalisée pour la cible, et
$M_{cible}$ est une matrice formant le résultat de la mesure réalisée pour la cible, corrigé des distorsions produites par l'émetteur et le récepteur.

D'autres particularités et avantages de la présente invention apparaîtront dans la description ci-après d'exemples de mise en oeuvre non limitatifs, en référence aux dessins annexés, dans lesquels :

- la figure 1 illustre symboliquement une mesure qui est effectuée avec un radar polarimétrique conforme à l'invention ;

- la figure 2 illustre symboliquement certaines étapes spécifiques d'un procédé de calibration conforme à l'invention ;

- la figure 3 montre un moyen amovible tel qu'utilisé lors d'une étape de mesure d'un procédé de calibration selon l'invention ;

- les figures 4A et 4B, à lire ensemble, sont un diagramme synoptique d'un procédé de calibration conforme à l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

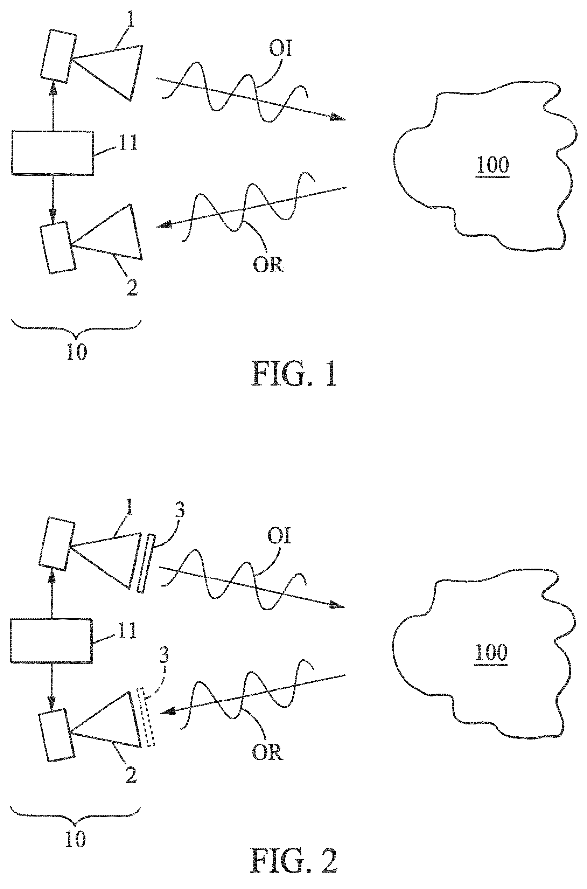

Conformément à la figure 1, un radar polarimétrique 10 comprend une antenne d'émission 1, aussi appelée émetteur, et une antenne de réception 2, aussi appelée récepteur. L'émetteur 1 peut être activé pour émettre une onde électromagnétique notée OI en direction d'une scène 100, et le récepteur 2 détecte une partie OR de cette onde qui est réfléchie par la scène 100. Cette partie OR de l'onde OI, qui est ainsi réfléchie en direction de l'émetteur 2 est parfois appelée succinctement onde réfléchie OR, ou même onde OR. L'émetteur 1 et le récepteur 2 peuvent être regroupés, lorsque le radar 10 est du type monostatique. Alternativement, ils peuvent être disposés à des endroits qui sont séparés spatialement, lorsque le radar 10 est du type bistatique. Chaque type monostatique ou bistatique pour le radar 10 peut être plus adapté que l'autre type en fonction de contraintes d'installation du radar 10 pour détecter la scène 100, mais aussi en fonction de la scène 100 elle-même, notamment de la directivité de son pouvoir de réflexion électromagnétique. Usuellement, la fréquence de l'onde OI est entre 30 MHz (mégahertz) et 18 GHz (gigahertz).

La référence 11 désigne un contrôleur du radar 10. Le contrôleur 11 est adapté pour commander une séquence de mesure qui est effectuée pour une cible quelconque vers laquelle le radar 10 est pointé, mais aussi pour commander une exécution des étapes d'un procédé de calibration du radar 10, qui est conforme à la présente invention.

Le principe de fonctionnement d'un tel radar polarimétrique a déjà été rappelé au début de cette description. L'émetteur 1 est activé pour produire l'onde OI successivement selon deux polarisations différentes. Ces deux polarisations forment une base, dite base de polarisation d'émission, dans laquelle une onde quelconque peut être exprimée comme une superposition de deux composantes qui sont associées respectivement aux polarisations de la base, avec des amplitudes complexes qui sont séparées. Le vecteur qui est formé par ces amplitudes, de dimension deux, est le vecteur de Jones. Mais à cause de distorsions de polarisation qui sont produites par l'émetteur 1 lui-même, l'onde OI qui est réellement produite par l'émetteur 1 ne possède pas l'une puis l'autre des polarisations de la base d'émission, mais à chaque fois une combinaison linéaire des deux polarisations de la base d'émission. Ces deux combinaisons sont caractérisées mathématiquement par une matrice complexe carrée de dimension deux, notée A et appelée matrice de distorsion d'émission.

Pour chaque émission de l'onde OI selon l'une puis l'autre polarisation d'émission, le récepteur 2 détecte deux composantes de polarisation de l'onde réfléchie OR, selon une base de polarisation de réception. Cette base de polarisation de réception est elle-même constituée de deux polarisations différentes, sans relation avec la base de polarisation d'émission. En fonction du mode de fonctionnement du récepteur 2, les deux composantes de polarisation de l'onde réfléchie OR peuvent être mesurées simultanément ou successivement. De façon similaire au cas de l'émetteur, le récepteur 2 produit aussi des distorsions de polarisation, si bien que les composantes de polarisation qui sont réellement mesurées sont chacune une combinaison linéaire des deux polarisations de la base de réception. Ces deux combinaisons produites au niveau du récepteur 2 sont caractérisées mathématiquement par une autre matrice complexe carrée de dimension deux, notée W et appelée matrice de distorsion de réception.

De façon générale, les distorsions d'émission et de réception peuvent produire des déphasages et/ou des atténuations qui sont différentes entre les deux polarisations d'une même base, et/ou un mélange de ces deux polarisations. Autrement dit, les matrices A et W ont des coefficients complexes diagonaux qui peuvent être différents, mais aussi des coefficients non-diagonaux qui peuvent être non nuls. La détermination des matrices A et W est l'objet de la calibration du radar 10. Elle est indispensable pour effectuer par la suite des mesures qui soient fiables sur des cibles d'intérêt. En effet, la caractéristique polarimétrique d'une cible quelconque est constituée par une autre matrice complexe carrée, encore de dimension deux, dite matrice de Sinclair. Cette matrice relie le vecteur de Jones de la partie de l'onde OR qui est réfléchie puis reçue par le récepteur 2, exprimée dans la base de polarisation de réception, au vecteur de Jones de l'onde OI qui est produite par l'émetteur 1, elle-même exprimée dans la base de polarisation d'émission. A cause des distorsions qui ont été expliquées ci-dessus, la matrice $M_0$ qui forme le résultat brut de la mesure polarimétrique, est reliée à la matrice de Sinclair $M_{cible}$ de la cible qui est visée, dans les conditions de la mesure, par la relation suivante :

$$M_{cible} = A^{-1} \cdot M_0 \cdot W^{-1}$$

Les bases de polarisation d'émission et de réception peuvent être composées chacune de deux polarisations linéaires, à titre d'exemple, mais elles peuvent être quelconques, sans corrélation entre la base pour l'émission et celle pour la réception.

Une des caractéristiques essentielles de l'invention est d'introduire, pour certaines des mesures qui sont effectuées pour la calibration, un moyen amovible sur le trajet de l'onde OI lorsque les mesures de calibration concernent l'émetteur 1, ou sur le trajet de l'onde OR lorsque les mesures de calibration concernent le récepteur 2. La figure 2 montre ce moyen amovible en traits continus, et référencé 3, tel qu'il est disposé pour certaines des mesures qui sont réalisées pour calibrer l'émetteur 1. Il est alors disposé devant la fenêtre de sortie de l'émetteur 1, d'où provient l'onde OI, sans recouvrir la fenêtre d'entrée du récepteur 2 à travers laquelle l'onde OR est détectée. La position du même moyen amovible 3 pour certaines des mesures qui sont réalisées pour calibrer le récepteur 2, est représentée en traits interrompus. Le moyen 3 est alors disposé devant la fenêtre d'entrée du récepteur 2 sans recouvrir la fenêtre de sortie de l'émetteur 1.

Le moyen amovible 3 possède deux axes actifs, ou axes propres, qui sont perpendiculaires à la direction de propagation de l'onde OI ou OR à travers le moyen amovible 3. Deux composantes d'onde électromagnétique qui possèdent des polarisations parallèles à l'un et à l'autre de ces axes actifs, respectivement, sont atténuées et/ou retardées différemment par le moyen 3. Autrement dit, l'effet du moyen 3 pour une onde qui le traverse, peut être exprimé par la matrice de transfert suivante, notée P et exprimée dans une base de polarisation qui correspond à ses axes actifs :

$$P = \begin{bmatrix} 1 & 0 \\ 0 & \lambda \end{bmatrix}$$

Cette matrice possède un premier coefficient, en haut à gauche, qui peut être pris égal à l'unité. En effet, la matrice P est définie à un coefficient multiplicatif près, complexe, lorsque les amplitudes et déphasages des deux composantes de l'onde qui traverse le moyen 3, polarisées respectivement selon l'un et l'autre de ses axes actifs, ne sont considérés qu'en valeurs relatives d'une composante par rapport à l'autre. Le coefficient $\lambda$ possède donc un module qui est égal au quotient des facteurs d'atténuation respectifs des deux composantes, et un argument complexe qui est égal à l'écart entre les déphasages subis par les deux composantes lors de la traversée de l'élément 3. Le coefficient $\lambda$ est différent de 1.

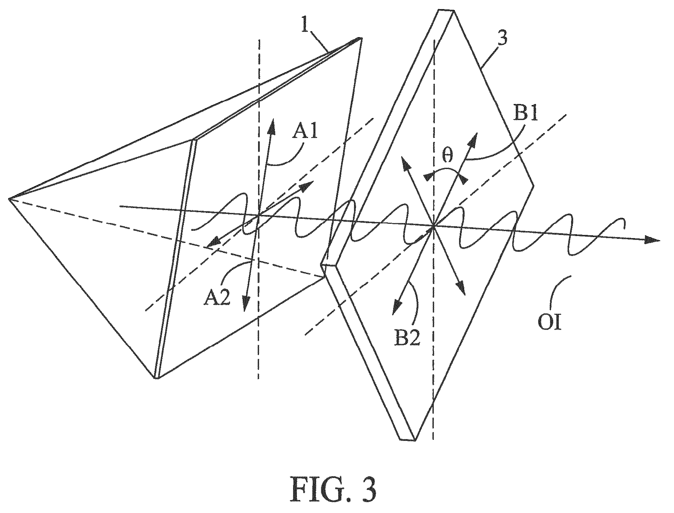

Dans des cas simples, les axes actifs du moyen 3 peuvent être deux directions de polarisation linéaire, orthogonales l'une par rapport à l'autre. La figure 3 illustre un tel cas, lorsque le moyen 3 est placé devant la fenêtre de sortie de l'émetteur 1. Les références A1 et A2 désignent les directions de la base de polarisation d'émission, dans le cas où celle-ci est composée de deux polarisations linéaires qui sont aussi perpendiculaires entre elles. B1 et B2 désignent les axes actifs du moyen amovible 3, et $\theta$ désigne l'angle orienté entre une direction d'origine arbitraire (verticale sur la figure 3) et l'axe actif B1. La matrice de transfert du moyen amovible 3 devient alors, lorsqu'elle est exprimée dans la base de polarisation d'émission : $R(\theta) \cdot P \cdot R(\theta)^{-1}$, où $R(\theta)$ est la matrice de rotation d'angle $\theta$.

Dans différentes réalisations, le moyen amovible 3 peut être constitué d'un réseau à fentes parallèles, ou être constitué d'un matériau biréfringent pour la fréquence d'onde électromagnétique qui est utilisée par le radar 10.

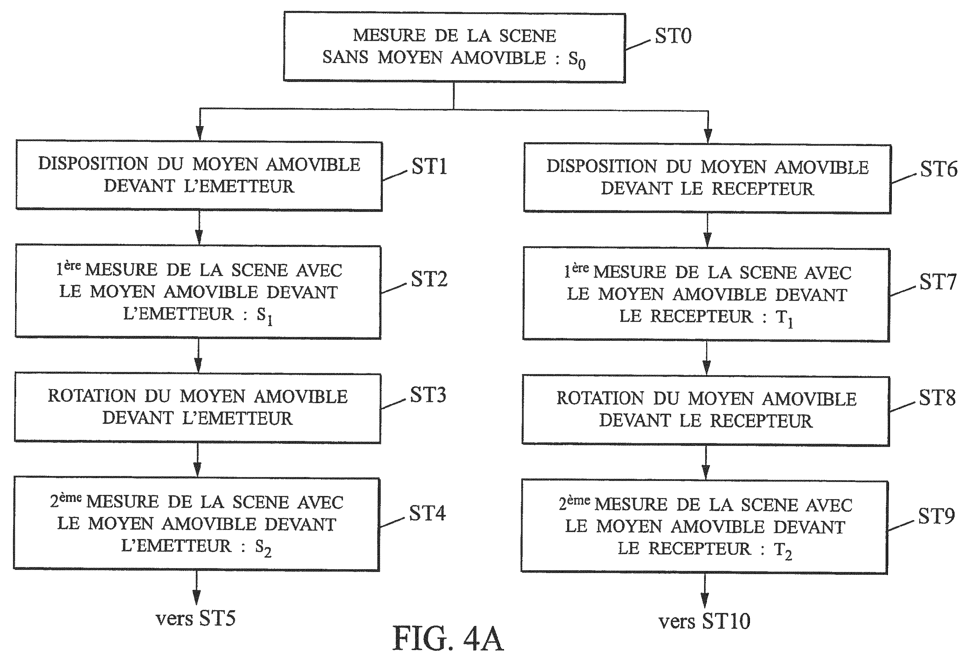

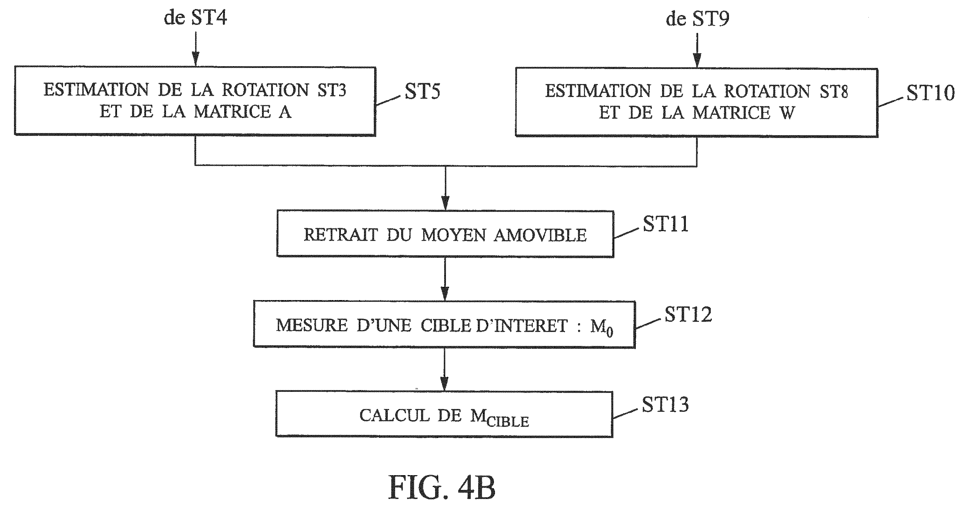

Le procédé de calibration de l'invention est maintenant décrit en référence aux figures 2 à 4A-4B. On suppose que les caractéristiques polarimétriques et les positions respectives de l'émetteur 1, du récepteur 2, du moyen amovible 3 et de la scène 100 sont constantes sur toute la durée des étapes de mesure du procédé. La scène 100 peut être quelconque. Toutefois, la calibration peut être plus précise lorsque la scène 100 possède un pouvoir de réflexion en direction du récepteur 2, qui est plus élevé.

L'étape ST0 consiste à effectuer initialement une mesure polarimétrique de la scène 100 sans utiliser le moyen amovible 3. La matrice de mesure polarimétrique $S_0$ qui est ainsi obtenue est : $S_0 = A \cdot S_{scène} \cdot W$, où $S_{scène}$ est la matrice de Sinclair de la scène 100.

Les calibrations respectives de l'émetteur 1 et du récepteur 2 sont ensuite effectuées séparément : les étapes ST1 à ST5 concernent la calibration de l'émetteur 1, et les étapes ST6 à ST10 concernent la calibration du récepteur 2. L'étape initiale ST0 peut être commune aux calibrations de l'émetteur 1 et du récepteur 2.

A l'étape ST1, le moyen amovible 3 est placé devant la fenêtre de sortie de l'émetteur 1, comme représenté sur la figure 3. Le moyen amovible 3 est ainsi placé avec une orientation angulaire autour de la direction de propagation de l'onde OI qui peut être quelconque. L'étape ST2 consiste alors à effectuer une seconde mesure polarimétrique de la scène 100, à travers le moyen amovible 3 ainsi disposé. Le résultat de cette mesure est la matrice : $S_1 = A \cdot R(\theta_1) \cdot P \cdot R(\theta_1)^{-1} \cdot S_{scène} \cdot W$, où $\theta_1$ est la valeur de l'angle $\theta$ pour cette mesure de l'étape ST2.

Le moyen amovible 3 est ensuite tourné autour de la direction de propagation de l'onde OI, à l'étape ST3. La nouvelle valeur de l'angle $\theta$ est alors $\theta_2$. Préférablement, l'écart angulaire $\theta_2$-$\theta_1$, qui est l'amplitude de cette rotation, est sensiblement distinct de 0° et 90°. Par exemple, l'écart $\theta_2$-$\theta_1$ peut être compris entre 35° et 55°, voire proche de 45°.

L'étape de mesure ST4 est une répétition de l'étape ST2, pour la nouvelle position angulaire du moyen amovible 3. Le nouveau résultat de mesure est alors la matrice : $S_2 = A \cdot R(\theta_2) \cdot P \cdot R(\theta_2)^{-1} \cdot S_{scène} \cdot W$.

L'étape d'estimation ST5 consiste à déduire les coefficients de la matrice A, à partir des matrices de mesure $S_0$, $S_1$ et $S_2$. Un avantage du procédé de l'invention est d'obtenir aussi une valeur numérique pour l'écart angulaire $\theta_2$-$\theta_1$, ainsi que pour le coefficient $\lambda$ de la matrice de transfert P, au cours de cette même étape.

Selon une façon d'exécuter l'étape ST5, on peut calculer les produits matriciels $S_1 \cdot S_0^{-1}$ et $S_2 \cdot S_0^{-1}$. Théoriquement, on a l'égalité suivante, dont le premier membre peut être calculé numériquement d'après les résultats des mesures des étapes ST0, ST2 et ST4 :

mesures des étapes ST0, ST2 et ST4 :

$$S_1 \cdot S_0^{-1} = [A \cdot R(\theta_1) \cdot P \cdot R(\theta_1)^{-1} \cdot S_{scène} \cdot W] \cdot [W^{-1} \cdot S_{scène}^{-1} \cdot A^{-1}], \text{ soit :}$$

$$S_1 \cdot S_0^{-1} = A \cdot R(\theta_1) \cdot P \cdot R(\theta_1)^{-1} \cdot A^{-1}$$

et en posant $C_1 = S_1 \cdot S_0^{-1}$ et $P_1 = R(\theta_1) \cdot P \cdot R(\theta_1)^{-1}$, on obtient encore :

$$C_1 = A \cdot P_1 \cdot A^{-1}$$

ou encore :

$$C_1 \cdot A - A \cdot P_1 = 0 \qquad\qquad (1)$$

Cette équation est connue de l'Homme du métier sous l'appellation de «équation de Sylvester». La matrice $C_1$ est connue numériquement à partir des mesures des étapes ST0 et ST2, et $P_1$ est inconnue à cause des valeurs de l'angle $\theta_1$ et du coefficient $\lambda$. Toutefois, la matrice $P_1$ a les mêmes valeurs propres que la matrice P : 1 et $\lambda$.

De même, l'étape de mesure ST4 conduit à la seconde équation :

$$C_2 \cdot A - A \cdot P_2 = 0 \qquad\qquad (2)$$

où les mêmes lettres avec l'indice 2 ont les mêmes significations que celles qui viennent d'être présentées pour l'indice 1, mais en étant transposées pour les conditions et résultats de l'étape ST4.

Les équations matricielles (1) et (2) fournissent huit équations scalaires entre nombres complexes, et les inconnues sont le coefficient $\lambda$, les angles $\theta_1$ et $\theta_2$, et les quatre coefficients de la matrice A : 7 inconnues. Il est donc possible d'obtenir les valeurs de ces inconnues, notamment en réalisant une résolution numérique à l'aide de moyens informatiques et d'algorithmes appropriés. En réalité, les solutions sont obtenues avec les indéterminations suivantes :

- la matrice A ne peut être déterminée en polarimétrie qu'à un coefficient multiplicatif près, qui est commun à ses quatre coefficients ; et
- l'origine commune des angles $\theta_1$ et $\theta_2$ est arbitraire, si bien que ces deux angles sont obtenus à une constante additive près qui leur est commune. Seule la différence $\theta_2$-$\theta_1$ est significative, puisqu'elle correspond à la rotation qui est appliquée au moyen amovible 3 à l'étape ST3.

Il est possible que dans certaines mises en oeuvre du procédé de calibration de l'invention, les directions A1 et A2 de la base de polarisation d'émission soient connues. Dans ce cas, l'indétermination sur l'origine des angles $\theta_1$ et $\theta_2$ est supprimée.

Il est possible de répéter les étapes ST3 et ST4 pour obtenir des équations supplémentaires qui sont similaires à l'équation (1) ou (2). De telles équations supplémentaires peuvent améliorer la précision de la résolution numérique. Pour cela, il est préférable de répartir les positions angulaires qui sont appliquées successivement au moyen amovible 3, à l'intérieur d'un quart de tour complet autour de la direction de propagation de l'onde OI. Par exemple, dans le cas d'une seule mesure supplémentaire, chaque rotation du moyen amovible 3 pourra être sensiblement égale à 30°. Similairement, dans le cas de deux mesures supplémentaires, chaque rotation du moyen amovible 3 pourra être sensiblement égale à 22,5°.

L'étape d'estimation ST5 est exécutée par un moyen de traitement approprié (non représenté), qui peut être avantageusement incorporé au radar polarimétrique 10. Un tel moyen de traitement comprend un support de stockage de données numériques et une unité de calcul, qui sont associés selon un agencement et une programmation accessibles à l'Homme du métier.

Les étapes ST6 à ST10 concernent la calibration du récepteur 2. La méthode est analogue à celle décrite pour l'émetteur 1, à savoir :

- le résultat de mesure de l'étape ST0, sans le moyen amovible 3, peut être repris ;

- le moyen amovible 3 est retiré de l'émetteur 1, et est disposé à l'étape ST6 devant la fenêtre d'entrée du récepteur 2 (voir l'indication en traits interrompus sur la figure 2), sur le trajet de l'onde OR, selon une première position angulaire autour de la direction de propagation de cette onde OR ;

- une première mesure polarimétrique de la scène 100 est effectuée dans cette configuration, à l'étape ST7, et $T_1$ désigne la matrice de mesure qui est ainsi obtenue ;

- l'étape ST8 consiste à tourner le moyen amovible 3 devant le récepteur 2, autour de la direction de propagation de l'onde réfléchie OR ;

- une seconde mesure polarimétrique de la scène 100 est alors effectuée à l'étape ST9, dans cette nouvelle configuration, et $T_2$ désigne la nouvelle matrice de mesure qui est alors obtenue ;

- l'étape ST10 est l'estimation de la matrice W à partir des résultats des mesures polarimétriques des étapes ST0, ST7 et ST9.

De préférence, le moyen amovible 3 est tourné à l'étape ST8 d'un angle de rotation qui est de nouveau sensiblement différent de 0° et de 90°. Cet angle peut être encore compris entre 35° et 55°, voire proche de 45°. Les positions angulaires qui sont adoptées pour le moyen amovible 3 aux étapes ST6 et ST8, n'ont aucune relation avec celles adoptées aux étapes ST1 et ST3.

L'étape ST10 peut débuter par le calcul des produits matriciels $S_0^{-1} \cdot T_1$ et $S_0^{-1} \cdot T_2$, de façon à éliminer maintenant la matrice A des équations. En effet :

$$S_0^{-1} \cdot T_1 = [W^{-1} \cdot S_{scène}^{-1} \cdot A^{-1}] \cdot [A \cdot S_{scène} \cdot R(\theta_3) \cdot P \cdot R(\theta_3)^{-1} \cdot W] = W^{-1} \cdot R(\theta_3) \cdot P \cdot R(\theta_3)^{-1} \cdot W$$

et de même :

$$S_0^{-1} \cdot T_2 = [W^{-1} \cdot S_{scène}^{-1} \cdot A^{-1}] \cdot [A \cdot S_{scène} \cdot R(\theta_4) \cdot P \cdot R(\theta_4)^{-1} \cdot W] = W^{-1} \cdot R(\theta_4) \cdot P \cdot R(\theta_4)^{-1} \cdot W$$

où $\theta_3$ et $\theta_4$ sont les angles du moyen 3 autour de la direction de propagation de l'onde OR, respectivement lors des étapes ST7 et ST9.

En posant $D_1 = S_0^{-1} \cdot T_1$, $D_2 = S_0^{-1} \cdot T_2$, $P_3 = R(\theta_3) \cdot P \cdot R(\theta_3)^{-1}$ et $P_4 = R(\theta_4) \cdot P \cdot R(\theta_4)^{-1}$, on obtient les deux équations :

$$D_1 = W^{-1} \cdot P_3 \cdot W, \text{ soit :} \qquad D_1 \cdot W^{-1} = W^{-1} \cdot P_3 \qquad\qquad (3)$$

$$D_2 = W^{-1} \cdot P_4 \cdot W, \text{ soit} \qquad D_2 \cdot W^{-1} = W^{-1} \cdot P_4 \qquad\qquad (4)$$

Les équations (3) et (4) sont similaires à celles (1) et (2) présentées plus haut, où la matrice $W^{-1}$ remplace la matrice A, $C_1$ est remplacée par $D_1$ qui est connue numériquement d'après les résultats des étapes ST0 et ST7, $P_1$ est remplacée par $P_3$, et de même $C_2$ est remplacée par $D_2$ qui est connue numériquement d'après les résultats des étapes ST0 et ST9, et $P_2$ est remplacée par $P_4$.

La suite de l'étape ST10 peut alors être déduite simplement de la description qui a été fournie pour l'étape ST5, par transposition sans effort de la part de l'Homme du métier. Les coefficients de la matrice $W^{-1}$ sont ainsi obtenus, puis ceux de la matrice W en effectuant une inversion matricielle.

Possiblement, le moyen amovible 3 peut produire des atténuations selon ses deux axes actifs B1 et B2, qui sont égales en module. Autrement dit, le module 3 n'introduit que des déphasages qui sont différents entre ses deux axes actifs B1 et B2. Dans ce cas, le module du coefficient $\lambda$ est égal à l'unité, et les étapes ST5 et ST10 ne permettent d'obtenir que les valeurs des arguments complexes, pour les coefficients des deux matrices de distorsions A et $W^{-1}$. La calibration obtenue est dite calibration de phase seulement.

Eventuellement aussi, le moyen amovible 3 peut retarder identiquement les composantes qui sont parallèles respectivement à ses deux axes actifs B1 et B2. Autrement dit, le module 3 ne produit que des atténuations d'amplitude qui sont distinctes entre les deux composantes, mais sans déphaser l'une d'elles par rapport à l'autre. Dans ce cas, le coefficient $\lambda$ est un nombre réel, et les étapes ST5 et ST10 ne permettent d'obtenir que les valeurs des modules pour les coefficients des deux matrices de distorsions A et $W^{-1}$. La calibration obtenue est dite calibration d'amplitude seulement.

Le procédé de calibration du radar polarimétrique 10 est alors terminé, et l'opérateur dispose des valeurs numériques des deux matrices de distorsions A et W, respectivement pour l'émetteur 1 et pour le récepteur 2. Le moyen amovible 3 peut être définitivement retiré à l'étape ST11, et une mesure polarimétrique peut ensuite être effectuée en pointant le radar 10 vers une cible d'intérêt. Le but d'une telle mesure peut être de détecter l'apparition de la cible dans un champ de surveillance donné, ou d'identifier la cible. Le procédé de mesure qui est mis en oeuvre est alors constitué par les étapes ST12 et ST13. L'étape ST12 comprend la séquence d'émission et de réception de l'onde radar, telle que pratiquée avant la présente invention. Le résultat brut de cette mesure est une matrice $M_0$ telle que déjà introduite. L'étape ST13 permet de corriger ce résultat brut de façon à supprimer les distorsions de polarisation qui sont introduites par l'émetteur 1 et par le récepteur 2. Pour cela, le produit matriciel suivant est calculé :

$$M_{cible} = A^{-1} \cdot M_0 \cdot W^{-1}$$

La matrice $M_{cible}$ qui est ainsi calculée caractérise la cible dans les conditions de réflexion qui sont fixées par les emplacements de l'émetteur 1 et du récepteur 2, et par l'orientation de la cible, mais elle est corrigée des distorsions polarimétriques qui sont causées par cet émetteur et ce récepteur. Elle est donc intrinsèque à la cible en ce qui concerne l'information polarimétrique, pour la position et l'orientation de la cible qui existent au moment de la mesure, par rapport à l'émetteur 1 et au récepteur 2 du radar 10.

Il est entendu que l'invention peut être reproduite en modifiant certains aspects de mise en oeuvre par rapport à la description détaillée qui vient d'être fournie. En particulier, les équations de Sylvester qui interviennent lors de l'estimation des matrices de distorsions polarimétriques, associées à l'émetteur et au récepteur, peuvent être résolues de différentes manières. Ces manières sont toutes considérées comme bien connues ou à la portée de l'Homme du métier.

De même, dans d'autres mises en oeuvre de l'invention, la base de polarisation d'émission et/ou celle de réception peut être constituée de polarisations non linéaires, par exemple circulaires ou plus généralement elliptiques.

**Revendications**

1. Procédé de calibration d'une antenne d'émission ou émetteur (1), ou d'une antenne de réception ou récepteur (2), d'un radar polarimétrique (10), l'antenne à calibrer et une scène (100) utilisée pour le procédé ayant des caractéristiques polarimétriques qui restent sensiblement constantes pendant l'étape de mesure du procédé, ledit procédé comprenant :

   /1/ une étape de mesures, comprenant au moins trois mesures polarimétriques (ST0, ST2, ST4 ; ST0, ST7, ST9), chaque mesure comprenant une émission d'un signal électromagnétique (OI) par l'émetteur (1) successivement selon au moins deux premières polarisations formant une base de polarisation d'émission, et pour chaque première polarisation une détection par le récepteur (2) d'une partie du signal réfléchie (OR) par la scène (100), selon au moins deux secondes polarisations formant une base de polarisation de réception ; et
   /2/ une étape d'estimation de caractéristiques polarimétriques de l'antenne à calibrer (ST5 ; ST10), à partir de résultats desdites mesures polarimétriques ;

   ledit procédé étant **caractérisé en ce que** dans l'étape de mesures /1/ :

   - au moins deux (ST2, ST4 ; ST7, ST9) desdites au moins trois mesures polarimétriques sont réalisées avec un moyen amovible (3), ledit moyen amovible ayant deux axes actifs (B1, B2), étant disposé sur un trajet du signal entre l'antenne à calibrer et la scène, et atténuant et/ou retardant différemment deux composantes de polarisation du signal qui sont respectivement parallèles aux deux axes actifs ;
- une position angulaire des deux axes actifs (B1, B2) autour d'une direction de propagation du signal à l'emplacement du moyen amovible (3), est variée entre chacune desdites au moins deux mesures polarimétriques (ST2, ST4 ; ST7, ST9) ; et
- au moins une autre (ST0) desdites au moins trois mesures polarimétriques est réalisée sans le moyen amovible (3)

et **en ce que** l'étape d'estimation /2/ comprend une résolution d'un système d'équations caractérisant au moins partiellement des distorsions polarimétriques produites par l'émetteur ou le récepteur, et modélisées par des matrices de nombres complexes.

2. Procédé de calibration selon la revendication 1, suivant lequel le radar polarimétrique (10) est monostatique ou bistatique.

3. Procédé de calibration selon la revendication 1 ou 2, suivant lequel les positions angulaires des deux axes actifs (B1, B2) du moyen amovible (3) lors desdites au moins deux mesures polarimétriques (ST2, ST4 ; ST7, ST9) réalisées avec le moyen amovible (3), présentent entre elles des écarts compris entre 70°/N et 110°/N, N étant le nombre des mesures polarimétriques réalisées avec le moyen amovible.

4. Procédé de calibration selon l'une quelconque des revendications 1 à 3, suivant lequel l'antenne à calibrer est l'émetteur (1) et le système d'équations résolu dans l'étape d'estimation (ST5) comprend les équations matricielles suivantes, n étant un indice entier non nul numérotant les mesures polarimétriques (ST2, ST4) réalisées avec le moyen amovible (3) disposé entre l'émetteur et la scène (100) :

$$C_n \cdot A - A \cdot R(\theta_n) \cdot P \cdot R(\theta_n)^{-1} = 0$$

où A est la matrice à deux lignes et deux colonnes de coefficients complexes, qui caractérise les distorsions polarimétriques produites par l'émetteur (1),
$C_n$ est égale à $S_n \cdot S_0^{-1}$,
$S_0$ est une matrice de mesure à coefficients complexes, obtenue pour la mesure polarimétrique (ST0) réalisée sans le moyen amovible (3), et exprimée dans les bases de polarisation d'émission et de réception,
$S_n$ est une matrice de mesure à coefficients complexes, obtenue pour chaque mesure polarimétrique (ST2, ST4) réalisée avec le moyen amovible (3) disposé entre l'émetteur (1) et la scène (100), et exprimée dans les bases de polarisation d'émission et de réception,
$\theta_n$ est un angle de la position angulaire du moyen amovible (3) pour la mesure polarimétrique n, et $R(\theta_n)$ est une matrice de rotation d'angle $\theta_n$, et
P est la matrice suivante :

$$P = \begin{bmatrix} 1 & 0 \\ 0 & \lambda \end{bmatrix}$$

$\lambda$ étant un quotient de deux valeurs complexes d'atténuation et de déphasage, relatives respectivement aux deux axes actifs (B1, B2) du moyen amovible (3),
et ledit système d'équations est résolu de façon à obtenir des valeurs numériques respectives pour chaque angle $\theta_n$, pour le quotient $\lambda$ et pour les coefficients de la matrice A.

5. Procédé de calibration selon l'une quelconque des revendications 1 à 3, suivant lequel l'antenne à calibrer est le récepteur (2) et le système d'équations résolu dans l'étape d'estimation (ST10) comprend les équations matricielles suivantes, n étant un indice entier non nul numérotant les mesures polarimétriques (ST7, ST9) réalisées avec le moyen amovible (3) disposé entre le récepteur et la scène (100) :

$$W \cdot D_n - R(\theta_n) \cdot P \cdot R(\theta_n)^{-1} \cdot W = 0$$

où W est la matrice à deux lignes et deux colonnes de coefficients complexes, qui caractérise les distorsions polarimétriques produites par le récepteur (2),

$D_n$ est égale à $S_0^{-1} \cdot T_n$,

$S_0$ est une matrice de mesure à coefficients complexes, obtenue pour la mesure polarimétrique (ST0) réalisée sans le moyen amovible (3), et exprimée dans les bases de polarisation d'émission et de réception,

$T_n$ est une matrice de mesure à coefficients complexes, obtenue pour chaque mesure polarimétrique (ST7, ST9) réalisée avec le moyen amovible (3) disposé entre la scène (100) et le récepteur (2), et exprimée dans les bases de polarisation d'émission et de réception,

$\theta_n$ est un angle de la position angulaire du moyen amovible (3) pour la mesure polarimétrique n, et $R(\theta_n)$ est une matrice de rotation d'angle $\theta_n$, et

P est la matrice suivante :

$$P = \begin{bmatrix} 1 & 0 \\ 0 & \lambda \end{bmatrix}$$

$\lambda$ étant un quotient de deux valeurs complexes d'atténuation et de déphasage, relatives respectivement aux deux axes actifs (B1, B2) du moyen amovible (3),

et ledit système d'équations est résolu de façon à obtenir des valeurs numériques respectives pour chaque angle $\theta_n$, pour le quotient $\lambda$ et pour les coefficients de la matrice W.

**6.** Radar polarimétrique (10) comprenant :

- une antenne d'émission ou émetteur (1), capable d'émettre en direction d'une scène (100), un signal électromagnétique (OI) selon deux premières polarisations, lesdites deux premières polarisations formant une base de polarisation d'émission ;

- une antenne de réception ou récepteur (2), capable de recevoir selon deux secondes polarisations, une partie du signal électromagnétique (OR) réfléchie par la scène, lesdites deux secondes polarisations formant une base de polarisation de réception ; et

- un contrôleur de mesure polarimétrique (11), capable de commander l'émetteur (1) pour émettre le signal électromagnétique (OI) selon une des premières polarisations puis selon l'autre première polarisation, et, pour chaque première polarisation, de commander le récepteur (2) pour détecter la partie réfléchie du signal, selon une des secondes polarisations et selon l'autre seconde polarisation ;

**caractérisé en ce qu'**il comprend en outre :

- un moyen amovible (3) ayant des caractéristiques polarimétriques modélisables par une matrice de transfert polarimétrique, dont deux valeurs propres complexes sont différentes et associées respectivement à deux axes actifs (B1, B2) dudit moyen amovible selon lesquels le signal électromagnétique est atténué et/ou retardé différemment ; et

- un moyen de traitement comprenant lui-même un moyen de stockage apte à stocker au moins trois résultats de mesures polarimétriques, et un moyen de calcul apte à exécuter l'étape d'estimation des caractéristiques polarimétriques de l'antenne à calibrer, lorsqu'un procédé de calibration selon l'une quelconque des revendications précédentes est mis en oeuvre pour ledit radar polarimétrique (10).

**7.** Procédé de calibration selon l'une quelconque des revendications 1 à 5, comprenant en outre :

- une étape de mesure polarimétrique réalisée en utilisant un radar polarimétrique (10) conforme à la revendication 6, et en dirigeant vers une cible le signal électromagnétique (OI) émis par l'émetteur (1), de façon à obtenir un résultat brut de mesure ; et

- une étape de correction, comprenant une combinaison du résultat brut de mesure avec des résultats de l'étape d'estimation /2/ appliquée à l'émetteur (1) et au récepteur (2) du radar polarimétrique utilisé (10).

**8.** Procédé de calibration selon la revendication 7, suivant lequel la combinaison du résultat brut de mesure avec les résultats du procédé de calibration, comprend le calcul suivant :

EP 2 887 090 B1

$$M_{cible} = A^{-1} \cdot M_0 \cdot W^{-1}$$

où $M_0$ est une matrice formant le résultat brut de la mesure réalisée pour la cible,

$M_{cible}$ est une matrice formant un résultat de la mesure réalisée pour la cible, corrigé des distorsions produites par l'émetteur (1) et le récepteur (2), et

A et W sont les matrices qui caractérisent les distorsions polarimétriques produites par l'émetteur (1) et le récepteur (2), respectivement.

**Patentansprüche**

1. Verfahren zur Eichung einer Sendeantenne oder eines Senders (1) oder einer Empfangsantenne oder eines Empfängers (2) eines polarimetrischen Radars (10), wobei die zu eichende Antenne und eine für das Verfahren verwendete Szene (100) polarimetrische Merkmale aufweisen, die während des Messschritts des Verfahrens im Wesentlichen konstant bleiben, wobei das Verfahren Folgendes umfasst:

   /1/ einen Messschritt, der mindestens drei polarimetrische Messungen (ST0, ST2, ST4; ST0, ST7, ST9) umfasst, wobei jedes Messen ein Senden eines elektromagnetischen Signals (OI) durch den Sender (1) aufeinanderfolgend in mindestens zwei ersten Polarisationen, die eine Sendepolarisationsgrundlage bilden, und für jede erste Polarisation ein Erfassen eines Teils des durch die Szene (100) reflektierten Signals (OR) durch den Empfänger (2) in mindestens zwei zweiten Polarisationen, die eine Empfangspolarisationsgrundlage bilden, umfasst;
   und

   /2/ einen Schritt des Schätzens polarimetrischer Merkmale der zu eichenden Antenne (ST5; ST10) anhand von Ergebnissen der polarimetrischen Messungen;

   wobei das Verfahren **dadurch gekennzeichnet ist, dass** im Messschritt /1/:

   - mindestens zwei (ST2, ST4; ST7, ST9) der mindestens drei polarimetrischen Messungen mit einem beweglichen Mittel (3) ausgeführt werden, wobei das bewegliche Mittel zwei aktive Achsen (B1, B2) aufweist, die auf einem Weg des Signals zwischen der zu eichenden Antenne und der Szene angeordnet sind und zwei Polarisationskomponenten des Signals, die jeweils parallel zu den beiden aktiven Achsen sind, in unterschiedlicher Weise abschwächen und/oder verzögern;
   - eine Winkelposition der beiden aktiven Achsen (B1, B2) um eine Ausbreitungsrichtung des Signals am Standort des beweglichen Mittels (3) zwischen jeder der mindestens zwei polarimetrischen Messungen (ST2, ST4; ST7, ST9) verändert wird; und
   - mindestens eine andere (ST0) der mindestens drei polarimetrischen Messungen ohne das bewegliche Mittel (3) ausgeführt wird,

   und dadurch, dass der Schätzschritt /2/ eine Auflösung eines Gleichungssystems umfasst, das polarimetrische Verzerrungen, die durch den Sender oder den Empfänger erzeugt und durch Matrizen komplexer Zahlen modellisiert werden, mindestens teilweise kennzeichnet.

2. Eichverfahren nach Anspruch 1, wobei der polarimetrische Radar (10) monostatisch oder bistatisch ist.

3. Eichverfahren nach Anspruch 1 oder 2, wobei die Winkelpositionen der beiden aktiven Achsen (B1, B2) des beweglichen Mittels (3) während den mindestens zwei polarimetrischen Messungen (ST2, ST4; ST7, ST9), die mit dem beweglichen Mittel (3) ausgeführt werden, zwischen einander Abstände im Bereich von 70°/N und 110°/N aufweisen, wobei N die Anzahl der mit dem beweglichen Mittel ausgeführten polarimetrischen Messungen ist.

4. Eichverfahren nach einem der vorangehenden Ansprüche 1 bis 3, wobei die zu eichende Antenne der Sender (1) ist und das im Schätzschritt (ST5) aufgelöste Gleichungssystem die folgenden Matrixgleichungen umfasst, wobei n ein ganzzahliger Index ungleich Null ist, der die polarimetrischen Messungen (ST2, ST4), die mit dem zwischen dem Sender und der Szene (100) angeordneten beweglichen Mittel (3) ausgeführt werden, nummeriert:

$$C_n \cdot A - A \cdot R(\theta_n) \cdot P \cdot R(\theta_n)^{-1} = 0$$

wobei A die zweizeilige und zweispaltige Matrix komplexer Koeffizienten ist, welche die durch den Sender (1) erzeugten polarimetrischen Verzerrungen kennzeichnet,

$C_n$ gleich $S_n \cdot S_0^{-1}$ ist,

$S_0$ eine Messmatrix mit komplexen Koeffizienten ist, die für die ohne das bewegliche Mittel (3) ausgeführte polarimetrische Messung (ST0) erhalten wird und in den Sende- und Empfangspolarisationsgrundlagen ausgedrückt ist,

$S_n$ eine Messmatrix mit komplexen Koeffizienten ist, die für jede polarimetrische Messung (ST2, ST4) erhalten wird, welche mit dem zwischen dem Sender (1) und der Szene (100) angeordneten beweglichen Mittel (3) ausgeführt wird, und in den Sende- und Empfangspolarisationsgrundlagen ausgedrückt ist,

$\theta_n$ ein Winkel der Winkelposition des beweglichen Mittels (3) für die polarimetrische Messung n ist und $R(\theta_n)$ eine Rotationsmatrix des Winkels $\theta_n$ ist und

P die folgende Matrix ist:

$$P = \begin{bmatrix} 1 & 0 \\ 0 & \lambda \end{bmatrix}$$

wobei $\lambda$ ein Quotient zweier komplexer Abschwächungs- und Phasenverschiebungswerte bezüglich jeweils der beiden aktiven Achsen (B1, B2) des beweglichen Mittels (3) ist,

und wobei das Gleichungssystem so aufgelöst wird, dass jeweilige numerische Werte für jeden Winkel $\theta_n$, für den Quotienten $\lambda$ und für die Koeffizienten der Matrix A erhalten werden.

5.  Eichverfahren nach einem der vorangehenden Ansprüche 1 bis 3, wobei die zu eichende Antenne der Empfänger (2) ist und das im Schätzschritt (ST10) aufgelöste Gleichungssystem die folgenden Matrixgleichungen umfasst, wobei n ein ganzzahliger Index ungleich Null ist, der die polarimetrischen Messungen (ST7, ST9), die mit dem zwischen dem Empfänger und der Szene (100) angeordneten beweglichen Mittel (3) ausgeführt werden, nummeriert:

$$W \cdot D_n - R(\theta_n) \cdot P \cdot R(\theta_n)^{-1} \cdot W = 0$$

wobei W die zweizeilige und zweispaltige Matrix komplexer Koeffizienten ist, welche die durch den Empfänger (2) erzeugten polarimetrischen Verzerrungen kennzeichnet,

$D_n$ gleich $S_0^{-1} \cdot T_n$ ist,

$S_0$ eine Messmatrix mit komplexen Koeffizienten ist, die für die ohne das bewegliche Mittel (3) ausgeführte polarimetrische Messung (ST0) erhalten wird und in den Sende- und Empfangspolarisationsgrundlagen ausgedrückt ist,

$T_n$ eine Messmatrix mit komplexen Koeffizienten ist, die für jede polarimetrische Messung (ST7, ST9) erhalten wird, welche mit dem zwischen der Szene (100) und dem Empfänger (2) angeordneten beweglichen Mittel (3) ausgeführt wurde, und in den Sende- und Empfangspolarisationsgrundlagen ausgedrückt ist,

$\theta_n$ ein Winkel der Winkelposition des beweglichen Mittels (3) für die polarimetrische Messung n ist und $R(\theta_n)$ eine Rotationsmatrix des Winkels $\theta_n$ ist und

P die folgende Matrix ist:

$$P = \begin{bmatrix} 1 & 0 \\ 0 & \lambda \end{bmatrix}$$

wobei $\lambda$ ein Quotient zweier komplexer Abschwächungs- und Phasenverschiebungswerte bezüglich jeweils der beiden aktiven Achsen (B1, B2) des beweglichen Mittels (3) ist
und wobei das Gleichungssystem so aufgelöst wird, dass jeweilige numerische Werte für jeden Winkel θn, für den Quotienten λ und für die Koeffizienten der Matrix W erhalten werden.

6. Polarimetrischer Radar (10), umfassend:

   - eine Sendeantenne oder einen Sender (1), die bzw. der in der Lage ist, ein elektromagnetisches Signal (OI) in Richtung einer Szene (100) in zwei ersten Polarisationen zu senden, wobei die beiden ersten Polarisationen eine Sendepolarisationsgrundlage bilden;
   - eine Empfangsantenne oder einen Empfänger (2), die bzw. der in der Lage ist, einen Teil des durch die Szene reflektierten elektromagnetischen Signals (OR) in zwei zweiten Polarisationen zu empfangen, wobei die beiden zweiten Polarisationen eine Empfangspolarisationsgrundlage bilden; und
   - eine polarimetrische Messsteuerung (11), die in der Lage ist, den Sender (1) zu steuern, um das Signal (OI) in einer der ersten Polarisationen und anschließend in der anderen ersten Polarisation zu senden, und für jede erste Polarisation den Empfänger (2) zu steuern, um den reflektierten Teil des Signals in einer der zweiten Polarisationen und in der anderen zweiten Polarisation zu erfassen;

   **dadurch gekennzeichnet, dass** er ferner Folgendes umfasst:

   - ein bewegliches Mittel (3) mit polarimetrischen Merkmalen, die durch eine polarimetrische Transfermatrix modellisierbar sind, deren zwei komplexe Eigenwerte unterschiedlich sind und jeweils zwei aktiven Achsen (B1, B2) des beweglichen Mittels, gemäß denen das elektromagnetische Signal unterschiedlich abgeschwächt und/oder verzögert wird, zugeordnet sind; und
   - ein Behandlungsmittel, das seinerseits ein Speichermittel, welches in der Lage ist, mindestens drei polarimetrische Messergebnisse zu speichern, und ein Berechnungsmittel, das in der Lage ist, den Schätzschritt der polarimetrischen Merkmale der zu eichenden Antenne auszuführen, wenn ein Eichverfahren nach einem der vorangehenden Ansprüche für den polarimetrischen Radar (10) durchgeführt ist, umfasst.

7. Eichverfahren nach einem der vorangehenden Ansprüche 1 bis 5, ferner umfassend:

   - einen polarimetrischen Messschritt, der unter Verwendung eines polarimetrischen Radars (10) nach Anspruch 6 und unter Ausrichtung des vom Sender (1) gesendeten elektromagnetisches Signals (OI) auf ein Ziel, um ein Bruttomessergebnis zu erhalten, ausgeführt wird; und
   - einen Korrekturschritt, der eine Kombination des Bruttomessergebnisses mit Ergebnissen des Schätzschritts /2/ umfasst, die auf den Sender (1) und auf den Empfänger (2) des verwendeten polarimetrischen Radars (10) angewandt wird.

8. Eichverfahren nach Anspruch 7, wobei die Kombination des Bruttomessergebnisses mit den Ergebnissen des Eichverfahrens folgende Berechnung umfasst:

$$M_{cible} = A^{-1} \cdot M_0 \cdot W^{-1}$$

   wobei $M_0$ eine Matrix ist, die das Bruttoergebnis der für das Ziel ausgeführten Messung bildet,
   wobei $M_{cible}$ eine Matrix ist, die ein Ergebnis der für das Ziel ausgeführten Messung bildet, das gegen die vom Sender (1) und vom Empfänger (2) erzeugten Verzerrungen korrigiert ist, und wobei A und W die Matrizen sind, welche die jeweils vom Sender (1) und vom Empfänger (2) erzeugten polarimetrischen Verzerrungen kennzeichnen.

## Claims

1. Method of calibrating a transmitting antenna or transmitter (1), or a receiving antenna or receiver (2), of a polarimetric radar (10), the antenna to be calibrated and a viewed scene (100) used for the method having polarimetric characteristics which remain substantially constant during the measuring step of the method, said method comprising:

   1) a measuring step, comprising at least three polarimetric measurements (ST0, ST2, ST4; ST0, ST7, ST9), each measurement comprising an emission of an electromagnetic signal (OI) by the transmitter (1) in, in succession, at least two first polarisations which form a base for transmission polarisation, and comprising, for each first polarisation, a detection by the receiver (2) of part of the signal reflected (OR) by the viewed scene (100), in at least two second polarisations which form a base for reception polarisation, and

2) a step of estimating polarimetric characteristics of the antenna to be calibrated (ST5; ST10) from results of said polarimetric measurements,

said method being **characterized in that**, in the measuring step 1):

- at least two (ST2, ST4; ST7, ST9) of said at least three polarimetric measurements are performed with a detachable means (3), said detachable means having two active axes (B1, B2), being arranged on a path of the signal between the antenna to be calibrated and the viewed scene, and differently attenuating and/or delaying two components of the polarisation of the signal which are parallel to respective ones of the two active axes,
- an angular position of the two active axes (B1, B2) about a direction of propagation of the signal at the location of the detachable means (3) is varied between each of said at least two polarimetric measurements (ST2, ST4; ST7, ST9), and
- at least one other (ST0) of said at least three polarimetric measurements is performed without the detachable means (3),

and **in that** the estimating step 2) comprises a solving of a system of equations which at least partly characterize polarimetric distortions caused by the transmitter or receiver and which are modelled by matrices of complex numbers.

2. Method of calibrating according to claim 1, wherein the polarimetric radar (10) is monostatic or bistatic.

3. Method of calibrating according to claim 1 or 2, wherein the angular positions of the two active axes (B1, B2) of the detachable means (3) during said at least two polarimetric measurements (ST2, ST4; ST7, ST9) performed with the detachable means (3) have differences between them of between 70°/N and 110°/N, N being the number of polarimetric measurements which are performed with the detachable means.

4. Method of calibrating according to any one of claims 1 to 3, wherein the antenna to be calibrated is the transmitter (1) and the system of equations which is solved in the estimating step (ST5) comprises the following matrix equations, n being a non-zero integer subscript used to number the polarimetric measurements (ST2, ST4) performed with the detachable means (3) arranged between the transmitter and the viewed scene (100):

$$C_n \cdot A - A \cdot R(\theta_n) \cdot P \cdot R(\theta_n)^{-1} = 0$$

where A is the matrix, having two rows and two columns of complex coefficients, which characterizes the polarimetric distortions caused by the transmitter (1),

$C_n$ is equal to $S_n \cdot S_0^{-1}$,

$S_0$ is a measurement matrix of complex coefficients which is obtained for the polarimetric measurement (ST0) performed without the detachable means (3) and which is expressed in the bases for transmission and reception polarisation,

$S_n$ is a measurement matrix of complex coefficients which is obtained for each polarimetric measurement (ST2, ST4) performed with the detachable means (3) arranged between the transmitter (1) and the viewed scene (100) and which is expressed in the bases for transmission and reception polarisation,

$\theta_n$ is an angle of the angular position of the detachable means (3) for the polarimetric measurement n, and $R(\theta_n)$ is a rotation matrix for the angle $\theta_n$, and

P is the following matrix:

$$P = \begin{bmatrix} 1 & 0 \\ 0 & \lambda \end{bmatrix}$$

$\lambda$ being a quotient of two complex values for attenuation and phase shift relative to respective ones of the two active axes (B1, B2) of the detachable means (3),
and said system of equations is solved so as to obtain respective numerical values for each angle $\theta_n$, for the quotient $\lambda$ and for the coefficients of the matrix A.

5. Method of calibrating according to any one of claims 1 to 3, wherein the antenna to be calibrated is the receiver (2) and the system of equations which is solved in the estimating step (ST10) comprises the following matrix equations, n being a non-zero integer subscript used to number the polarimetric measurements (ST7, ST9) performed with the detachable means (3) arranged between the receiver and the viewed scene (100):

$$W \cdot D_n \; - \; R(\theta_n) \cdot P \cdot R(\theta_n)^{-1} \cdot W \; = \; 0$$

where W is the matrix, having two rows and two columns of complex coefficients, which characterizes the polarimetric distortions caused by the receiver (2),
$D_n$ is equal to $S_0^{-1} \cdot T_n$,
$S_0$ is a measurement matrix of complex coefficients which is obtained for the polarimetric measurement (ST0) performed without the detachable means (3) and which is expressed in the bases for transmission and reception polarisation,
$T_n$ is a measurement matrix of complex coefficients which is obtained for each polarimetric measurement (ST7, ST9) performed with the detachable means (3) arranged between the viewed scene (100) and the receiver (2) and which is expressed in the bases for transmission and reception polarisation,
$\theta_n$ is an angle of the angular position of the detachable means (3) for the polarimetric measurement n, and $R(\theta_n)$ is a rotation matrix for the angle $\theta_n$, and
P is the following matrix:

$$P = \begin{bmatrix} 1 & 0 \\ 0 & \lambda \end{bmatrix}$$

$\lambda$ being a quotient of two complex values for attenuation and phase shift relative to respective ones of the two active axes (B1, B2) of the detachable means (3),
and said system of equations is solved so as to obtain respective numerical values for each angle $\theta_n$, for the quotient $\lambda$ and for the coefficients of the matrix W.

6. Polarimetric radar (10) comprising:

- a transmitting antenna or transmitter (1) capable of transmitting in the direction of a viewed scene (100) an electromagnetic signal (01) in two first polarisations, said two first polarisations forming a base for transmission polarisation,
- a receiving antenna or receiver (2) capable of receiving in two second polarisations part of the electromagnetic signal (OR) reflected by the viewed scene, said two second polarisations forming a base for reception polarisation, and
- a controller for polarimetric measurement (11) which is capable of controlling the transmitter (1) to transmit the electromagnetic signal (01) in one of the first polarisations and then in the other first polarisation and, for each first polarisation, of controlling the receiver (2) to detect the reflected part of the signal in one of the second polarisations and in the other second polarisation,

**characterized in that** it also comprises:

- a detachable means (3) having polarimetric characteristics able to be modelled by a polarimetric transfer matrix of which two complex eigenvalues are different and are associated with respective ones of two active axes (B1, B2) of said detachable means on which the electromagnetic signal is differently attenuated and/or delayed, and
- processing means which in turn comprises storage means suitable for storing at least three results of polarimetric measurements, and calculating means suitable for performing the step of estimating the polarimetric characteristics of the antenna to be calibrated, when a method of calibrating according to any one of the preceding claims is implemented for said polarimetric radar (10).

7. Method of calibrating according to any one of claims 1 to 5, also comprising:

   - a step of polarimetric measurement which is carried out by using a polarimetric radar (10) according to claim 6 and by directing towards a target the electromagnetic signal (OI) transmitted by the transmitter (1), so as to obtain a gross result of measurement, and
   - a correcting step, comprising combining the gross result of measurement with results from the estimating step 2) applied to the transmitter (1) and the receiver (2) of the polarimetric radar (10) used.

8. Method of calibrating according to claim 7, wherein the combining of the gross result of measurement with the results from the method of calibrating comprises the following calculation:

   the following calculation:

   $$M_{target} = A^{-1} \cdot M_0 \cdot W^{-1}$$

   where $M_0$ is a matrix which forms the gross result of the measurement performed for the target,
   $M_{target}$ is a matrix which forms a result of the measurement performed for the target, corrected for the distortions caused by the transmitter (1) and the receiver (2), and
   A and W are matrices which characterize the polarimetric distortions caused by the transmitter (1) and receiver (2) respectively.

FIG. 1

FIG. 2

FIG. 3

```
┌─────────────────────────────────┐
│        MESURE DE LA SCENE       │──── ST0
│    SANS MOYEN AMOVIBLE : S₀     │
└─────────────────────────────────┘
```

$$\text{MESURE DE LA SCENE SANS MOYEN AMOVIBLE : } S_0 \quad ST0$$

$$\text{DISPOSITION DU MOYEN AMOVIBLE DEVANT L'EMETTEUR} \quad ST1$$

$$\text{DISPOSITION DU MOYEN AMOVIBLE DEVANT LE RECEPTEUR} \quad ST6$$

$$1^{\text{ère}} \text{ MESURE DE LA SCENE AVEC LE MOYEN AMOVIBLE DEVANT L'EMETTEUR : } S_1 \quad ST2$$

$$1^{\text{ère}} \text{ MESURE DE LA SCENE AVEC LE MOYEN AMOVIBLE DEVANT LE RECEPTEUR : } T_1 \quad ST7$$

$$\text{ROTATION DU MOYEN AMOVIBLE DEVANT L'EMETTEUR} \quad ST3$$

$$\text{ROTATION DU MOYEN AMOVIBLE DEVANT LE RECEPTEUR} \quad ST8$$

$$2^{\text{ème}} \text{ MESURE DE LA SCENE AVEC LE MOYEN AMOVIBLE DEVANT L'EMETTEUR : } S_2 \quad ST4$$

$$2^{\text{ème}} \text{ MESURE DE LA SCENE AVEC LE MOYEN AMOVIBLE DEVANT LE RECEPTEUR : } T_2 \quad ST9$$

vers ST5

vers ST10

## FIG. 4A

EP 2 887 090 B1

de ST4

de ST9

ESTIMATION DE LA ROTATION ST3
ET DE LA MATRICE A — ST5

ESTIMATION DE LA ROTATION ST8
ET DE LA MATRICE W — ST10

RETRAIT DU MOYEN AMOVIBLE — ST11

MESURE D'UNE CIBLE D'INTERET : $M_0$ — ST12

CALCUL DE $M_{CIBLE}$ — ST13

FIG. 4B

## RÉFÉRENCES CITÉES DANS LA DESCRIPTION

**Documents brevets cités dans la description**

- US 20120007770 A

**Littérature non-brevet citée dans la description**

- **NASHASHIBI.** A Calibration Technique for Polarimetric Coherent-on-Receive Radar Systems. *IEEE transactions on Antennas and Propagation,* Avril 1995, vol. 43